# EUROPÄISCHE PATENTSCHRIFT

(11) **EP 0 766 070 B1**
(45) Veröffentlichungstag und Bekanntmachung des Hinweises auf die Patenterteilung: **04.07.2001**
(21) Anmeldenummer: 95115280.0
(22) Anmeldetag: 28.09.1995
(51) Int. Cl.: G01F 23/296

(54) **Ultraschallwandler**
Ultrasonic transducer
Sonde ultrasonique

(43) Veröffentlichungstag der Anmeldung: 02.04.1997
(73) Patentinhaber: ENDRESS + HAUSER GMBH + CO., D-79689 Maulburg (DE)
(72) Erfinder: Eckert, Manfred, D-79674 Todtnau (DE); Schwald, Rolf, D-79650 Schopfheim (DE); Flögel, Karl, D-79650 Schopfheim (DE)
(74) Vertreter: Morstadt, Volker, Dipl.-Ing.

(56) Entgegenhaltungen:
- EP-A- 0 228 510
- WO-A-88/08605
- DE-A- 4 311 963

## Beschreibung

Die Erfindung betrifft einen Ultraschallwandler zur Messung des Füllstands in einem Behälter.

Ein von dem Ultraschallwandler ausgesendeter Ultraschall-Impuls wird an der Oberfläche des Füllgutes reflektiert. Die Laufzeit des Ultraschall-Impulses von dem Wandler zu der Oberfläche und zurück wird ermittelt und daraus der Füllstand bestimmt.

Derartige Ultraschallwandler werden in vielen Industriezweigen, z.B. in der Wasser- und Abwasserbranche und in der Chemie, eingesetzt.

Sie weisen vorzugsweise einen kleinen Durchmesser auf, damit die Öffnungen des Behälters oder eines Schallführungsrohres, in denen sie zu montieren sind, ebenfalls klein sein können.

Zur Erzeugung des Ultraschall-Impulses dient üblicherweise ein in einem topfartigen Gehäuse angeordnetes scheibenförmiges piezoelektrisches Element, das zu Schwingungen angeregt wird.-Der Boden des Gehäuses hat die Funktion einer Membran, auf die die Schwingungen übertragen und durch die die Ultraschall-Impulse abgestrahlt werden.

Zwischen dem piezoelektrischen Element und der Membran ist eine Kunststoffschicht zur Anpassung der akustischen Impedanz des piezoelektrischen Elements an die akustische Impedanz des Mediums, in das die Ultraschall-Impulse auszusenden sind, angeordnet.

Ein in dem Gehäuse verbleibender, durch eine membranabgewandte Kreisfläche und eine zylindrische Mantelfläche des piezoelektrischen Elements begrenzter Hohlraum ist mit einer Dämpfungsschicht, z.B. aus einem Kunststoff, ausgefüllt. Diese Dämpfungsschicht hat die Aufgabe, die Abstrahlung von Schallenergie in radialer und in membran-abgewandter Richtung zu minimieren.

Je kleiner die Abmessungen des piezoelektrischen Elements und damit des Ultraschallwandlers sind, desto größer ist die Sendefrequenz. Ein solcher Ultraschallwandler mit einer Sendefrequenz von z.B. 50 kHz und entsprechend geringen Abmessungen ist in der US-A 4,130,018 beschrieben.

Zwischen dem Wandlerelement, der Dämpfungsschicht und dem Gehäuse besteht jedoch eine direkte mechanische Kopplung, so daß die Abstrahlung von Schallenergie in radialer und membran-abgewandter Richtung nicht vollständig unterbunden werden kann. Diese Energie steht nicht mehr zur Erzeugung des Meßsignals zur Verfügung.

Ein Teil dieser Energie wird auf den Behälter übertragen. Dies führt, insb. bei Metallbehältern, die eine sehr hohe Schwingungsgüte aufweisen, zu einer Einschränkung des Meßbereichs des Ultraschallwandlers. Die Impulsdauer des ausgesendeten Ultraschall-Impulses wird durch die Rückkopplung der Schwingungsenergie des Behälters auf das Wandlerelement verlängert. Dadurch ist ein größerer im folgenden als 'Blockdistanz' bezeichneter Mindestabstand zwischen dem Ultraschallwandler und der Oberfläche des Füllguts erforderlich. Liegt die Oberfläche innerhalb der Blockdistanz, ist keine Messung des Füllstandes möglich.

In der DE-A 43 11 963 ist ein Ultraschallwandler zur Messung eines Füllstandes in einem Behälter beschrieben mit
- einem topfförmigen Wandlergehäuse,
- einem im Wandlergehäuse angeordneten Wandlerelement zur Aussendung und zum Empfang von Ultraschall-Impulsen,
- einem das Wandlergehäuse bis auf eine Bodenfläche des Wandlergehäuses vollständig umschließenden Gehäuse,
   -- wobei das Wandlergehäuse in dem Gehäuse gegen eine Verschiebung in axialer und radialer Richtung durch an das Wandlergehäuse endseitig angeformte, in eine Nut im Gehäuse einrastende Federkrallen fixiert ist,
- einem zwischen dem Gehäuse und dem Wandlergehäuse angeordneten, das Wandlerelement koaxial einschließenden zylindrischen Hohlraum und
- zwei zwischen dem Wandlergehäuse und dem Gehäuse angeordneten, den Hohlraum endseitig abschließenden elastischen Elementen.

An das Gehäuse ist auf der wandlergehäuseboden-abgewandten Seite ein Anschlußteil angeformt, mittels dessen der Ultraschallwandler in einen Flansch einzuschrauben ist. Dieser wiederum ist an einer Öffnung eines Behälters anzubringen. Der Ultraschallwandler, der einen durch den zylindrischen Hohlraum und das das Wandlergehäuse umschließende Gehäuse vergrößerten Durchmesser aufweist, befindet sich im Inneren des Behälters, und das Anschlußteil durchdringt den Flansch. Die Montage eines solchen Gerätes ist folglich aufwendig.

Zwischen dem Gehäuse und der Bodenfläche besteht ein Spalt, in dem sich Rückstände des Füllgutes ansammeln können. Dies ist besonders dann nachteilig, wenn das Füllgut ein agressives Material ist oder der Ultraschallwandler nacheinander verschiedenen Füllgütern ausgesetzt ist, die insb. miteinander chemisch reagieren.

Bei dem Ultraschallwandler nach der DE-A 43 11 963 ist eine Aussendung von Schallenergie in radialer Richtung durch den zylindrischen Hohlraum sehr starkt reduziert. Eine Übertragung von Schallenergie auf den Behälter tritt jedoch über das Anschlußteil weiterhin auf.

Es ist eine Aufgabe der Erfindung, einen kleinen, kompakten, leicht montierbaren und um dessen Längsachse drehbaren Ultraschallwandler zur Füllstandsmessung in einem Behälter anzugeben, der praktisch keine Schwingungsenergie auf den Behälter überträgt.

Hierzu besteht die Erfindung in einem Ultraschallwandler zur Messung eines Füllstandes in einem Behälter mit
- einem topfförmigen Wandlergehäuse,
- einem mit dem Wandlergehäuse verbundenen Elektronikgehäuse,
- einem im Wandlergehäuse angeordneten Wandlerelement zur Aussendung und zum Empfang von Ultraschall-Impulsen,
- einem Überwurfring zur schallentkoppelnden Befestigung des Ultraschallwandlers am Behälter,
   -- in dem das Wandlergehäuse koaxial zum Überwurfring gelagert und darin gegen eine Verschiebung in axialer Richtung fixiert ist, und
- zwei zwischen dem Wandlergehäuse und dem Überwurfring angeordneten elastischen Elementen, durch die das Wandlergehäuse und der Überwurfring in radialer Richtung derart voneinander beabstandet gehalten sind, daß zwischen ihnen keine direkte mechanische Kopplung in radialer Richtung besteht.

Gemäß einer Ausgestaltung der Erfindung weist ein offenes Ende des Wandlergehäuses an dessen offenem Ende eine sich radial nach außen erstreckende Schulter auf, die auf einer Absatzfläche im Inneren des Überwurfrings aufliegt.

Gemäß einer weiteren Ausgestaltung der Erfindung ist das Wandlergehäuse im Überwurfring durch ein überstumpfwinkliges Kreisringsegment, das in einer in dem Überwurfring angeordneten Nut fixiert ist, das sich radial in die Öffnung des Überwurfrings erstreckt und das mit einer absatzflächen-zugewandten Kreisringsegmentfläche auf einer absatzflächen-abgewandten Ringfläche der Schulter des Wandlergehäuses aufliegt, und durch die auf der Absatzfläche des Überwurfrings aufliegende Schulter des Wandlergehäuses fixiert.

Gemäß einer Ausgestaltung der Erfindung sind die elastischen Elemente in im Überwurfring angeordneten Nuten fixierte O-Ringe.

Gemäß einer anderen Ausgestaltung der Erfindung weist ein offenes Ende des Wandlergehäuses Gewindebohrungen zur Verbindung mit dem Elektronikgehäuse auf.

Gemäß einer anderen Ausgestaltung der Erfindung weist ein offenes Ende des Wandlergehäuses ein Innengewinde zur Verbindung mit dem Elektronikgehäuse auf.

Gemäß einer Ausgestaltung der Erfindung ist das Wandlergehäuse in dem Überwurfring um seine Längsachse drehbar gelagert.

Gemäß einer Ausgestaltung der Erfindung ist in einer in einem an dem Überwurfring auf einer behälter-zugewandten Seite angeformten Absatzring angeordneten Nut ein elastisches Element zur Schallentkopplung in axialer Richtung angeordnet.

Die Erfindung und weitere Vorteile werden anhand der Figuren der Zeichnung, in denen ein Ausführungsbeispiel dargestellt ist, näher erläutert. Gleiche Elemente sind in den Figuren mit gleichen Bezugszeichen versehen.
- Fig. 1 zeigt: einen Ultraschallwandler,
- Fig. 2 zeigt: einen Längschnitt durch das Wandlergehäuse des Ultraschallwandlers von Fig. 1,
- Fig. 3 zeigt: einen Längschnitt durch den Überwurfring des Ultraschallwandlers von Fig. 1, und
- Fig. 4 zeigt: ein überstumpfwinkliges Kreisringsegment.

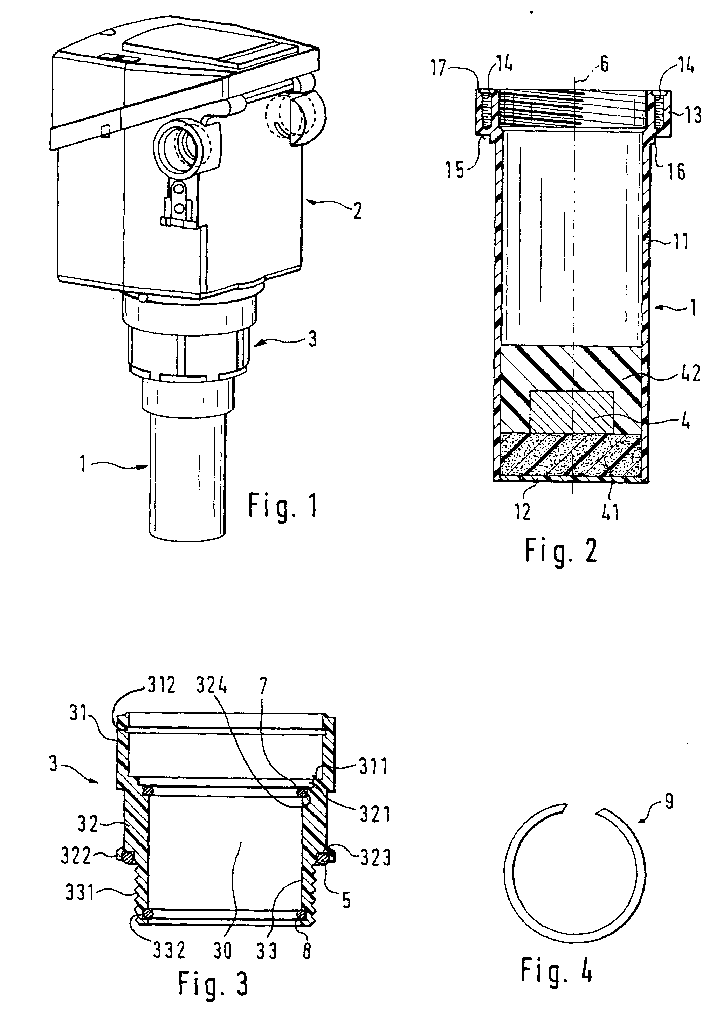

Das in Fig. 1 dargestellte Ausführungsbeispiel eines Ultraschallwandlers besteht aus drei Grundelementen, einem topfförmigen Wandlergehäuse 1, einem Elektronikgehäuse 2 und einem Überwurfring 3. Das Wandlergehäuse 1 ist in den Überwurfring 3 einzusetzen, und anschließend ist das Elektronikgehäuse 2 zu montieren. Der Ultraschallwandler ist also modular und kompakt aufgebaut.

Fig. 2 zeigt einen Längsschnitt durch das Wandlergehäuse 1. Es umfaßt einen Hohlzylinder 11, der endseitig von einer Membran 12 abgeschlossen ist und besteht aus einem Kunststoff, vorzugsweise aus einem Thermoplast mit hoher chemischer Beständigkeit, z.B. Polyvinylchlorid (PVC) oder Polyvinyldifluorid (PVDF).

An einem offenen Ende des Hohlzylinders 11 ist eine Schulter 13 angeformt, die sich radial nach außen erstreckt. Im dargestellten Ausführungsbeispiel ist das Elektronikgehäuse 2 mit dem Wandlergehäuse 1 verschraubt. Hierzu weist die Schulter 13 Gewindebohrungen 14 auf.

Gleichermaßen ist es möglich, daß der Hohlzylinder 11 an seinem offenen Ende ein Innengewinde aufweist, in das das Elektronikgehäuse 2 einzuschrauben ist.

An einer membran-zugewandten Ringfläche 15 der Schulter 13 ist ein Absatzring 16 an den Hohlzylinder 11 angeformt, dessen Funktion weiter unten näher erläutert wird.

Im Wandlergehäuse 1 ist ein Wandlerelement 4, das abwechselnd zur Aussendung und zum Empfang von Ultraschall-Impulsen dient, angeordnet. Dies ist beispielsweise ein piezoelektrisches Element, das durch eine in den Figuren nicht dargestellte elektronische Schaltung zu impulsförmigen Schwingungen angeregt wird. Nach jeder Aussendung eines Ultraschall-Impulses dient das Wandlerelement 4 als Empfangselement. Durch den an der Oberfläche des Füllgutes reflektierten Ultraschall-Impuls wird das Wandlerelement 4 zu Schwingungen angeregt. Die resultierende piezoelektrische Spannung ist über Anschlußleitungen einer weiteren, ebenfalls nicht dargestellten elektronischen Schaltung zugeführt, die die Laufzeit des Ultraschall-Impulses ermittelt, daraus den Füllstand bestimmt und ein dem Füllstand entsprechendes Signal einer weiteren Verarbeitung und/oder Anzeige zugänglich macht.

Zur Anpassung der akustischen Impedanz des Wandlerelements 4 an die akustische Impedanz des Mediums, in das die Ultraschall-Impulse zu senden sind, ist zwischen dem Wandlerelement 4 und der Membran 12 eine Anpaßschicht 41 aus einem Kunststoff, angeordnet.

Ein im Wandlergehäuse 1 verbleibender, durch eine membranabgewandte Kreisfläche und eine zylindrische Mantelfläche des Wandlerelements 4 begrenzter Hohlraum ist mit einer Dämpfungsschicht 42 aus einem Kunststoff ausgefüllt. Diese Dämpfungsschicht hat die Aufgabe, die Abstrahlung von Schallenergie in radialer und in membran-abgewandter Richtung zu minimieren.

Das Wandlergehäuse 1 ist in einem in Fig. 3 im Längsschnitt dargestellten Überwurfring 3 anzuordnen. Dieser besteht aus drei Bereichen 31, 32, 33, von denen der erste Bereich 31 einen Innendurchmesser aufweist, der geringfügig größer als der Außendurchmesser der Schulter 13 des Wandlergehäuses 1 ist. Der zweite und der dritte Bereich 32, 33 weist jeweils einen Innendurchmesser auf, der geringfügig größer als der Außendurchmesser des Hohlzylinders 11 des Wandlergehäuses 1 ist.

Zwischen den Bereichen 31, 32 besteht somit eine Absatzfläche 311, auf der die Ringfläche 15 des Wandlergehäuses 1 im zusammemengebauten Zustand aufliegt. Der zweite Bereich 32 weist an dessen dem ersten Bereich 31 zugewandten Ende eine Ausnehmung 321 zur Aufnahme des Absatzrings 16 auf. Der Absatzring 16 dient bei der Montage der Zentrierung des Wandlergehäuses 1 im Überwurfring 3.

Der zweite Bereich 32 weist außen die Form einer Sechskantschraube auf, und an dem dritten Bereich 33 ist ein Außengewinde 331 angeformt, das von außen in eine nicht dargestellte Öffnung des Behälters einzuschrauben ist. Gleichermaßen kann der Ultraschallwandler in die Behälteröffnung eingeschweißt oder daran mittels eines Flanschs befestigt werden. Die Außenform des Bereichs 33 ist dann entsprechend auszubilden.

Auf der dem dritten Bereich 33 zugewandten Seite weist der zweite Bereich 32 außen einen Absatzring 322 auf. In diesem ist auf der dem dritten Bereich 33 zugewandten Seite eine Nut 323 zur Aufnahme eines elastischen Elements 5, z.B. einer Dichtung aus einem Elastomer, angeformt. Dieses elastische Element 5 bewirkt eine Schallentkopplung in axialer Richtung zwischen dem Überwurfring 3 und dem Behälter.

Das Wandlergehäuse 1 ist im Überwurfring 3 in axialer Richtung fixiert. Hierzu weist der erste Bereich 31 endseitig eine in seinem Inneren verlaufende Nut 312 auf. Im zusammengebauten Zustand fluchtet die Nut 312 mit der hohlzylinder-abgewandten Seite der Schulter 13 des Wandlergehäuses 1. In die Nut 312 ist ein in Fig. 4 dargestelltes überstumpfwinkliges Kreisringsegment 9, z.B. aus Federstahl, einzuspannen, das sich radial in den Innenraum 30 des Überwurfrings 3 erstreckt und das mit einer innenraum-zugewandten Kreisringsegmentfläche auf einer äußeren Ringfläche 17 der Schulter 13 des Wandlergehäuses 1 aufliegt.

Diese Fixierung wirkt lediglich in axialer Richtung. Das Wandlergehäuse 1 und das damit verbundene Elektronikgehäuse 2 sind somit in dem Überwurfring 3 um eine Längsachse 6 des Wandlergehäuses 1 drehbar gelagert.

Der zweite und der dritte Bereich 32, 33 des Überwurfrings 3 weisen jeweils endseitig eine in deren Innenraum angeordnete Nut 324, 332 zur Aufnahme jeweils eines elastischen Elements 7, 8 auf. Diese sind z.B. Viton-O-Ringe, Kalrez-Dichtungen oder polytetrafluorethylenummantelte Viton-Dichtungen. Da das elastische Element 8 mit dem Füllgut des Behälters in Berührung kommt, ist hier ein dem Füllgut angepaßtes Material einzusetzen, das gegebenfalls eine hohe chemische Beständigkeit aufweist.

Durch die beiden elastischen Elemente 7, 8 sind das Wandlergehäuse 1 und der Überwurfring 3 in radialer Richtung derart voneinander beabstandet gehalten, daß zwischen ihnen keine direkte mechanische Kopplung in radialer Richtung besteht.

Entlang des Hohlzylinders 11 besteht im durch die beiden elastischen Elemente 7, 8 begrenzten Bereich ein rohrförmiger Hohlraum zwischen dem Wandlergehäuse 1 und dem Überwurfring 3. In diesem Bereich wird praktisch keine Schallenergie vom Wandlergehäuse 1 auf den Überwurfring 3 übertragen, da an den beiden Grenzflächen, zwischen dem Wandlergehäuse 1 und dem Hohlraum und zwischen dem Hohlraum und dem Überwurfring 3 ein erheblicher Schallimpedanzsprung vorliegt.

## Patentansprüche

1. Ultraschallwandler zur Messung eines Füllstandes in einem Behälter mit
- einem topfförmigen Wandlergehäuse (1),
- einem mit dem Wandlergehäuse (1) verbundenen Elektronikgehäuse (2),
- einem in dem Wandlergehäuse (1) angeordneten Wandlerelement (4) zur Aussendung und zum Empfang von Ultraschall-Impulsen,
- einem Überwurfring (3) zur schallentkoppelnden Befestigung des Ultraschallwandlers am Behälter,
-- in dem das Wandlergehäuse (1) koaxial zum Überwurfring (3) gelagert und darin gegen eine Verschiebung in axialer Richtung fixiert ist, und
- zwei zwischen dem Wandlergehäuse (1) und dem Überwurfring (3) angeordneten elastischen Elementen (7, 8), durch die das Wandlergehäuse (1) und der Überwurfring (3) in radialer Richtung derart voneinander beabstandet gehalten sind, daß zwischen ihnen keine direkte mechanische Kopplung in radialer Richtung besteht.

2. Ultraschallwandler nach Anspruch 1, bei dem ein offenes Ende des Wandlergehäuses (1) eine sich radial nach außen erstreckende Schulter (13) aufweist, die auf einer Absatzfläche (311) im Inneren des Überwurfrings (3) aufliegt.

3. Ultraschallwandler nach Anspruch 2, bei dem das Wandlergehäuse (1) im Überwurfring (3)
- durch ein überstumpfwinkliges Kreisringsegment (9),
-- das in einer in dem Überwurfring (3) angeordneten Nut (312) fixiert ist,
-- das sich radial in den Innenraum (30) des Überwurfrings (3) erstreckt und
-- das mit einer absatzflächen-zugewandten Kreisringsegmentfläche auf einer absatzflächen-abgewandten Ringfläche (17) der Schulter (13) des Wandlergehäuses (1) aufliegt, und
- durch die auf der Absatzfläche (311) des Überwurfrings (3)aufliegende Schulter (13) des Wandlergehäuses (1) fixiert ist.

4. Ultraschallwandler nach Anspruch 1, bei dem die elastischen Elemente (7, 8) in im Überwurfring (3) angeordneten Nuten (324, 332) fixierte O-Ringe sind.

5. Ultraschallwandler nach Anspruch 1, bei dem ein offenes Ende des Wandlergehäuses (1) Gewindebohrungen (14) zur Verbindung mit dem Elektronikgehäuse (2) aufweist.

6. Ultraschallwandler nach Anspruch 1, bei dem ein offenes Ende des Wandlergehäuses (1) ein Innengewinde zur Verbindung mit dem Elektronikgehäuse (2) aufweist.

7. Ultraschallwandler nach Anspruch 1, bei dem das Wandlergehäuse (1) in dem Überwurfring (3) um seine Längsachse (6) drehbar gelagert ist.

8. Ultraschallwandler nach Anspruch 1, bei dem in einer in einem an dem Überwurfring (3) auf einer behälter-zugewandten Seite angeformten Absatzring (322) angeordneten Nut (323) ein elastisches Element (5) zur Schallentkopplung in axialer Richtung angeordnet ist.

## Claims

1. Ultrasonic transducer for measuring a filling level in a container, having
- a pot-shaped transducer housing (1),
- an electronics housing (2) connected to the transducer housing (1),
- a transducer element (4), arranged in the transducer housing (1) for emitting and receiving ultrasonic pulses,
- a screw collar ring (3) for fastening the ultrasonic transducer on the container in a sound-decoupling fashion,
-- in which the transducer housing (1) is mounted coaxially with the screw collar ring (3) and is fixed therein against being displaced in the axial direction, and
- two elastic elements (7, 8) which are arranged between the transducer housing (1) and the screw collar ring (3) and by means of which the transducer housing (1) and the screw collar ring (3) are held spaced apart from one another in the radial direction in such a way that no direct mechanical coupling exists between them in the radial direction.

2. Ultrasonic transducer according to Claim 1, in which an open end of the transducer housing (1) has a shoulder (13) which extends radially outwards and rests on a shoulder surface (311) in the interior of the screw collar ring (3).

3. Ultrasonic transducer according to Claim 2, in which the transducer housing (1) is fixed in the screw collar ring (3)
- by a reflexively angled annular segment (9),
-- which is fixed in a groove (312) arranged in the screw collar ring (3),
-- which extends radially into the interior (30) of the screw collar ring (3), and
-- which rests with an annular segment surface facing the shoulder surface on a ring surface (17), averted from the shoulder surface, of the shoulder (13) of the transducer housing (1), and
- by the shoulder (13), resting on the shoulder surface (311) of the screw collar ring (3), of the transducer housing (1).

4. Ultrasonic transducer according to Claim 1, in which the elastic elements (7, 8) are O-rings fixed in grooves (324, 332) arranged in the screw collar ring (3).

5. Ultrasonic transducer according to Claim 1, in which an open end of the transducer housing (1) has threaded bores (14) for connecting to the electronics housing (2).

6. Ultrasonic transducer according to Claim 1, in which an open end of the transducer housing (1) has an internal thread for connecting to the electronics housing (2).

7. Ultrasonic transducer according to Claim 1, in which the transducer housing (1) is mounted rotatably about its longitudinal axis (6) in the screw collar ring (3).

8. Ultrasonic transducer according to Claim 1, in which an elastic element (5) for decoupling sound is arranged in the axial direction in a groove (323) arranged in a stepped ring (322) integrally formed on the screw collar ring (3) on a side facing the container.

## Revendications

1. Transducteur à ultrasons pour mesurer un niveau de remplissage dans un réservoir, comprenant :
- un boîtier (1) de transducteur en forme de pot,
- un boîtier électronique (2) relié au boîtier (1) du transducteur,
- un élément (4) du transducteur disposé dans le boîtier (1) du transducteur pour émettre et pour recevoir des impulsions d'ultrasons,
- un anneau de fixation (3) utilisé pour la fixation, à neutralisation acoustique, du transducteur à ultrasons sur le réservoir,
-- transducteur à ultrasons dans lequel le boîtier (1) du transducteur est positionné de façon coaxiale par rapport à l'anneau de fixation (3) dans lequel le boîtier est fixé pour empêcher un déplacement dans le sens axial, et
- deux éléments élastiques (7, 8) disposés entre le boîtier (1) du transducteur et l'anneau de fixation (3), éléments élastiques grâce auxquels le boîtier (1) du transducteur et l'anneau de fixation (3) sont maintenus espacés l'un de l'autre dans le sens radial, de façon telle, qu'il n'existe entre eux aucun couplage mécanique direct dans le sens radial.

2. Transducteur à ultrasons selon la revendication 1, dans lequel une extrémité ouverte du boîtier (1) du transducteur comprend un épaulement (13) se prolongeant radialement vers l'extérieur, lequel épaulement est en appui sur une surface d'épaulement (311) à l'intérieur de l'anneau de fixation (3).

3. Transducteur à ultrasons selon la revendication 2, dans lequel le boîtier (1) du transducteur est fixé, dans l'anneau de fixation (3),
- par un segment d'anneau circulaire (9) à angle rentrant,
-- lequel segment d'anneau circulaire est fixé dans une rainure (312) disposée dans l'anneau de fixation (3),
-- lequel segment d'anneau circulaire s'étend radialement dans l'espace intérieur (30) de l'anneau de fixation (3), et
-- lequel segment d'anneau circulaire, avec sa surface tournée vers la surface d'épaulement, est en appui sur une surface annulaire (17) placée à l'opposé de la surface de l'épaulement (13) du boîtier (1) du transducteur, et
- par l'épaulement (13) du boîtier (1) du transducteur venant en appui sur la surface d'épaulement (311) de l'anneau de fixation (3).

4. Transducteur à ultrasons selon la revendication 1, dans lequel les éléments élastiques (7, 8) sont des joints toriques fixés dans des rainures (324, 332) disposées dans l'anneau de fixation (3).

5. Transducteur à ultrasons selon la revendication 1, dans lequel une extrémité ouverte du boîtier (1) du transducteur comprend des perçages filetés (14) pour l'assemblage avec le boîtier électronique (2).

6. Transducteur à ultrasons selon la revendication 1, dans lequel une extrémité ouverte du boîtier (1) du transducteur comprend un filetage intérieur pour l'assemblage avec le boîtier électronique (2).

7. Transducteur à ultrasons selon la revendication 1, dans lequel le boîtier (1) du transducteur est logé, dans l'anneau de fixation (3), en pouvant pivoter autour de son axe longitudinal (6).

8. Transducteur à ultrasons selon la revendication 1, dans lequel un élément élastique (5) est disposé dans une rainure (323) disposée dans un anneau à épaulement (322) formé sur l'anneau de fixation (3), sur un côté tourné vers le réservoir, cet élément élastique servant à la neutralisation acoustique dans le sens axial.
